# EUROPEAN PATENT APPLICATION

(11) **EP 2 557 804 A2**
(43) Date of publication of application: **13.02.2013**
(21) Application number: 12179845.8
(22) Date of filing: 09.08.2012
(51) Int. Cl.: H04N 13/04

(54) **Three dimensional glasses and driving method of the same**

(30) Priority: 10.08.2011 US 201161521939 P; 16.07.2012 KR 20120077188
(71) Applicant: Samsung Electronics Co., Ltd., Suwon-si, Gyeonggi-do, 443-742 (KR)
(72) Inventor: Choi, Nak-won, Incheon (KR); Park, Jung-jin, Gyeonggi-do (KR); Koo, Jae-phil, Chungcheongnam-do (KR); Min, Kwan-sik, Gyeonggi-do (KR); Ha, Tae-hyeun, Gyeonggi-do (KR)
(74) Representative: Bruce, Alexander Richard Henry

(57) **Abstract**

Three-dimensional glasses include a first driving portion that receives a sync signal from an image display apparatus on which a three-dimensional image is displayed, and generates and outputs a timing signal using the received sync signal; a second driving portion that receives an input voltage and outputs the input voltage using the timing signal; a storage portion that stores information for pairing with the image display apparatus and outputs the stored information on request of the first driving portion; and a lens portion having left and right eye glasses that alternately perform on and off operation based on the output voltage of the second driving portion, wherein the second driving portion and the storage portion are configured of a single chip.

## Description

The present invention relates to three-dimensional (3D) glasses and a driving method of the three-dimensional glasses. More particularly, the present disclosure relates to three-dimensional glasses and a driving method of the three-dimensional glasses that can reduce the number of integrated circuits (IC) so that the 3D glasses may be miniaturized, and/or the structure of the integrated circuits may be simplified to reduce power consumption or generated heat when a driving portion for driving the three-dimensional glasses is formed on a printed circuit board as an integrated circuit.

In recent years, an image display apparatus that provides three-dimensional images having a cubic-effect (stereoscopic effect) as well as two-dimensional images has been developed. Particularly, image display apparatuses that can display three-dimensional images having a cubic-effect may be classified as using one of two methods: a glasses type method using special glasses and a non-glasses type method that does not use special glasses. The glasses type method using the special glasses may be classified as a color filter method that separates and selects images using color filters having a complementary relationship, a polarizing filter method that separates left eye images from right eye images using a shade effect by combining polarizing elements intersected at right angles, and a shutter glasses method that can allow users to feel a cubic (stereoscopic) effect by alternately blocking left and right eyes corresponding to a sync signal as left and right eye image signals are displayed on a screen.

In the shutter glasses method, in order to view a three-dimensional image having a cubic effect, the left eye glass and the right eye glass of the three-dimensional glasses should be alternately turned on and off by a sync signal transmitted from an image display apparatus.

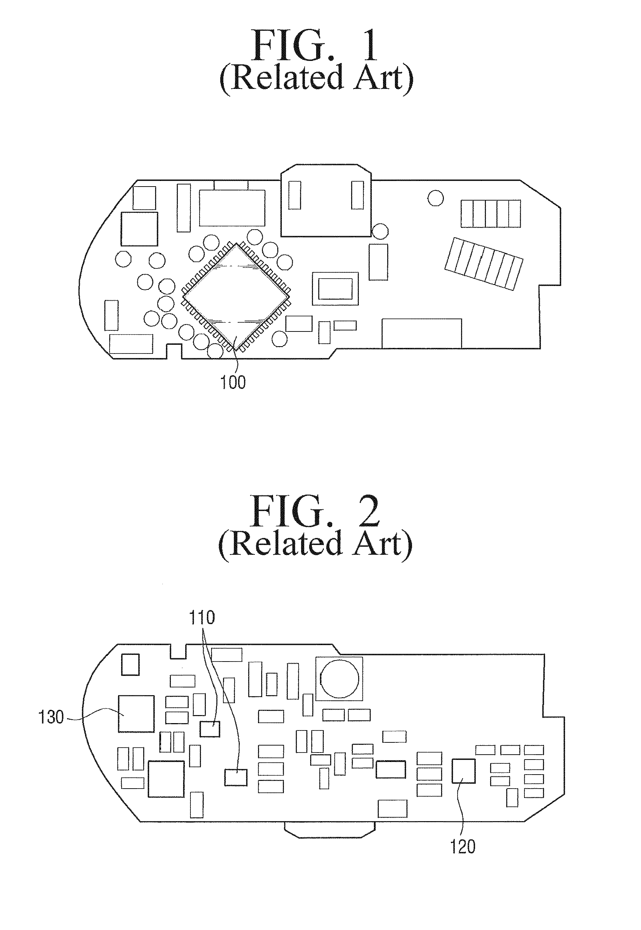

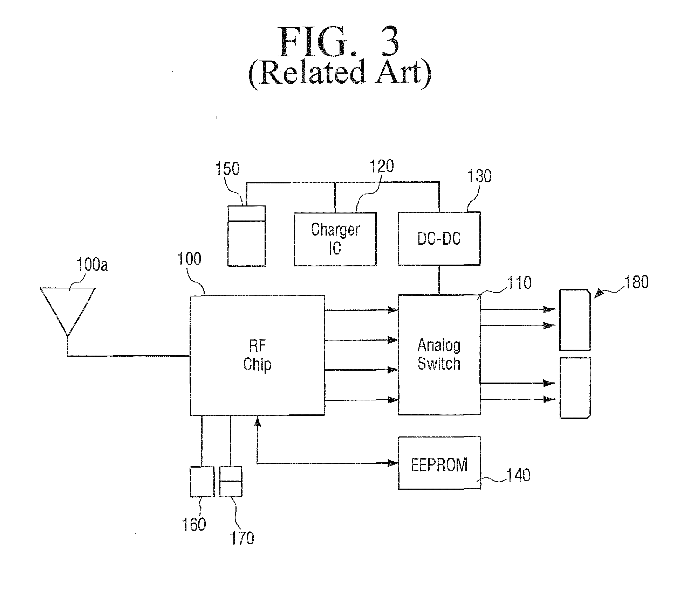

FIG. 1 is a plan view illustrating one side of an inner printed circuit board of conventional three-dimensional glasses, and FIG. 2 is a plan view illustrating the other side of the printed circuit board of FIG. 1. FIG. 3 is a block diagram illustrating a driving mechanism of the three-dimensional glasses of FIG. 1.

As illustrated in FIGS. 1 to 3, the conventional three-dimensional glasses comprise various driving integrated circuit chips and peripheral devices formed on a printed circuit board.

The driving integrated circuit chips, as illustrated in FIGS. 1 and 3, may include integrated circuits such as a radio-frequency (RF) chip 100 that processes a sync signal received through an antenna 100a from an image display apparatus, an analog switch 110 that outputs a converted voltage to a lens portion 180 in response to the sync signal, a DC/DC converter 130 that converts voltage of a battery portion 150, a charger 120 that converts external commercial electric power to charge the battery portion 150, an electrically erasable programmable read-only memory (EEPROM) 140, etc. Also, the peripheral devices may include the battery portion 150, a button portion 160, a light emitting device 170, etc.

However, since the conventional three-dimensional glasses are formed so that the RF chip 100 controls all peripheral circuits such as the analog switch 110, etc., the number of pins of the RF chip to output signals is increased and the RF chip has a relatively high price. Further, power consumption of the RF chip 100, particularly, the amount of power being consumed when receiving RF signals from the image display apparatus is relatively high.

Further, since in addition to the RF chip 100, the integrated circuits (ICs), such as the analog switch 110, the DC/DC converter 130, the charger 120, etc., are formed on the printed circuit board separately from each other, there are problems such that the size of the printed circuit board is relatively high and space efficiency for circuit configuration is relatively low.

The exemplary embodiments have been developed in order to address the above drawbacks and other problems associated with the conventional arrangement of 3D glasses. An aspect of an exemplary embodiment is to provide three-dimensional glasses and a driving method of three-dimensional glasses that can may be miniaturized by reducing the number of integrated circuits. This arrangment may reduce power consumption or heat by simplifying the structures of the integrated circuits when a driving portion to drive the three-dimensional glasses is formed in an integrated circuit form on a printed circuit board.

The above aspect and/or other features of the exemplary embodiments can be substantially achieved by providing three-dimensional glasses which may include a first driver that receives a sync signal from an image display apparatus on which a three-dimensional image is displayed, and generates and outputs a timing signal corresponding to the received sync signal; a second driver that receives an input voltage and outputs the input voltage according to the timing signal; a storage that stores information for pairing with the image display apparatus and outputs the stored information on request of the first driver; and a lens component having left and right eye glasses that alternately perform an on and off operation based on the output voltage of the second driver, wherein the second driver and the storage are configured of a single chip.

The first driver and the second driver may be connected with each other by at least one timing signal line that processes the timing signal.

The sync signal may include additional information in addition to the timing signal; and the first driver and the second driver may be connected with each other by a data signal line that processes the additional information.

Each of the first driver and the second driver may include a controller which processes the additional information; and each of the first driver and the second driver may be configured as a master or a slave.

The three-dimensional glasses may include a sync signal requester that transmits a request signal to the image display apparatus that the three-dimensional glasses targets, wherein the image display apparatus sends the sync signal to the three-dimensional glasses that transmitted the request signal.

The three-dimensional glasses may include an infrared signal receiver that receives an infrared signal from the image display apparatus as the sync signal, wherein when the first driver receives and processes a radio frequency (RF) signal that can perform two-way communication as the sync signal, the second driver processes the infrared signal which is received by the infrared signal receiver.

The first driver may include a signal transmitter that re-transmits the received sync signal to at least one other three-dimensional glasses apparatus.

According to another aspect of an exemplary embodiment, a driving method of a three-dimensional glasses may include receiving a sync signal at the three-dimensional glasses from an image display apparatus on which a three-dimensional image is displayed; transmitting the received sync signal to at least one second pair of glasses for a user; and driving left and right eye glasses to alternately perform on and off operations based on the sync signal.

The transmitting the received sync signal to at least one second pair of glasses for a user may include converting the received sync signal into another sync signal different from the received sync signal and transmitting it.

According to another aspect of an exemplary embodiment, a driving method of a three-dimensional glasses may include requesting a sync signal from a target image display apparatus which can display a three-dimensional image; receiving the sync signal from the target image display apparatus based on the request; and driving left and right eye glasses to alternately perform on and off operations based on the sync signal.

The requesting a sync signal may from a target image display apparatus which can display a three-dimensional image may include transmitting an infrared signal to the image display apparatus in order to request transmission of the sync signal.

Other objects, advantages and salient features of the present disclosure will become apparent from the following detailed description, which, taken in conjunction with the attached drawings, discloses exemplary embodiments.

These and/or other aspects and advantages of the exemplary embodiments will become apparent and more readily appreciated from the following description of the embodiments, taken in conjunction with the accompanying drawings of which:
FIG. 1 is a plan view illustrating one side of an inner printed circuit board of conventional three-dimensional glasses;
FIG. 2 is a plan view illustrating the other side of the printed circuit board of FIG. 1;
FIG. 3 is a block diagram illustrating a driving mechanism of the three-dimensional glasses of FIG. 1;
FIG. 4 is a view for explaining a three-dimensional image realization system according to an exemplary embodiment of the present disclosure;
FIG. 5 is a block diagram illustrating an exemplary structure of glasses for a user of FIG. 4;
FIG. 6A and 6B are views illustrating a schematic of a top and bottom of a printed circuit board in which a driving portion of FIG. 5 is formed on the printed circuit board;
FIG. 7 is a view illustrating exemplary structural details of a first driving portion of FIG. 5;
FIG. 8 is a view illustrating exemplary structural details of a second driving portion of FIG. 5;
FIG. 9 is a block diagram illustrating another exemplary structure of glasses for a user of FIG. 4;
FIG. 10 is a block diagram illustrating still another exemplary structure of glasses for a user of FIG. 4;
FIG. 11 is a view for explaining a three-dimensional image realization system according to another aspect of an exemplary embodiment of the present disclosure;
FIG. 12 is a block diagram illustrating an exemplary structure of glasses for a user of FIG. 11;
FIG. 13 is a view for explaining a three-dimensional image realization system according to another aspect of an exemplary embodiment of the present disclosure;
FIG. 14 is a block diagram illustrating an exemplary structure of glasses for a user of FIG. 13;
FIG. 15 is a view for explaining a three-dimensional image realization system according to another aspect of an exemplary embodiment of the present disclosure;
FIG. 16 is a block diagram illustrating an exemplary structure of glasses for a user of FIG. 15;
FIG. 17 is a view illustrating a method for realizing a three-dimensional image according to an exemplary embodiment of the present disclosure;
FIG. 18 is a flowchart illustrating a driving method of glasses for a user according to an exemplary embodiment of the present disclosure; and
FIG. 19 is a flowchart illustrating a driving method of glasses for a user according to another aspect of an exemplary embodiment of the present disclosure.

Throughout the drawings, like reference numerals will be understood to refer to like parts, components and structures.

Hereinafter, certain exemplary embodiments of the present disclosure will be described in detail with reference to the accompanying drawings.

The matters described herein, such as a detailed construction and elements thereof, are provided to assist in a comprehensive understanding of this description. Thus, it is apparent that exemplary embodiments may be carried out without those defined matters. Also, well-known functions or constructions are omitted to provide a clear and concise description of the exemplary embodiments. Further, dimensions of various elements in the accompanying drawings may be arbitrarily increased or decreased for clarity to and assist in acquiring a comprehensive understanding of the drawings.

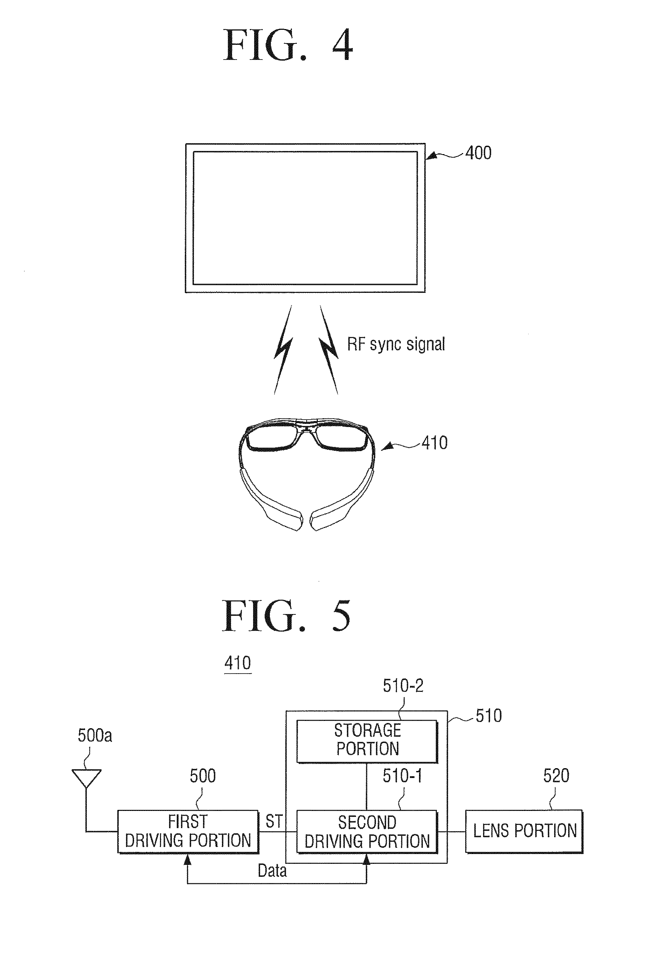

FIG. 4 is a view for explaining a three-dimensional image realization system according to an exemplary embodiment of the present disclosure.

As illustrated in FIG. 4, a three-dimensional image realization system according to an exemplary embodiment of the present disclosure may include an image display apparatus 400 and glasses for a user 410.

The image display apparatus 400 is a display apparatus that can realize a three-dimensional image, and may be a liquid crystal display (LCD), a plasma display panel (PDP), a light-emitting diode (LED) display apparatus including an organic light-emitting diode (OLED), etc. When three-dimensional images are provided from a broadcasting station or a user device such as a camcorder, the image display apparatus 400 processes the three-dimensional image data, displays them on a screen thereof, and, while the three-dimensional image is displayed on the screen, sends a sync signal synchronized to the three-dimensional image to the glasses for a user 410. However, when a two-dimensional image is input, the image display apparatus 400 may convert the two-dimensional image into a three-dimensional image, and while the converted three-dimensional image is displayed on the screen, sends a sync signal synchronized thereto to the glasses for a user 410. Here, to convert the two-dimensional image into the three-dimensional image, a unit frame of the input two-dimensional image is defined as a left eye image. For every unit frame, the left eye image is shifted by a predetermined amount to generate a right eye image, and the images are displayed in the order of a left eye L1 → a right eye R1 → the left eye L2 → the right eye R2. At this time, depth information of the right eye image can be obtained using objects and a background of the left eye image, for example.

The image display apparatus 400 uses a radio-frequency signal (hereinafter, referred to as an RF signal), such as Zigbee, Bluetooth, and WiFi, that can perform bidirectional communication, as a sync signal and sends it to the glasses for a user 410. Alternatively, in addition to the RF signal, an infrared signal or a signal in the form of packets can be sent as the sync signal. Also, the sync signal, for example, the RF signal can be sent to the glasses for a user 410 whenever the left and right eye images are displayed. Alternatively, when an arbitrary left or right eye image is displayed, a first sync signal is sent and a next sync signal can be sent at predetermined time intervals. At this time, additional information with respect to the predetermined time interval may be sent with the sync signal. The additional information may include duty information that indicates time information when a unit frame is actually implemented from among an entire time that the unit frame can be implemented.

For example, if the image display apparatus 400 sends a sync signal per 60 frames, the image display apparatus 400 can send the additional information with respect to this to the glasses for a user 410. This may be determined when the system of the image display apparatus 400 is first designed. In other words, if when the sync signal is sent per 60 frames, a 2-bit signal e.g. "10" is defined (or set) to be used as the additional information between the image display apparatus 400 and the glasses for a user 410, the glasses for a user 410 can determine that the sync signal is provided per 60 frames based on the additional information.

On the other hand, the glasses for a user 410 can be three-dimensional glasses using a shutter glasses method that alternately turns on and off the left and right eye glasses according to the sync signal sent from the image display apparatus 400. At this time, the three-dimensional glasses are designed to receive infrared signals or RF signals as the sync signal. Alternatively, the three-dimensional glasses may be designed to receive both infrared signals and RF signals as the sync signal. The glasses for a user 410 may include a frame, lenses, and a driving portion to drive the lenses. Here, the lenses include the left and right eye lenses, and each of the left and right eye lenses may include two glass sections and a liquid crystal between the two glass sections. At this time, the liquid crystal is twisted according to a voltage being applied to the two glass sections so that an open-close operation is performed. For example, in case of a normal clear mode, when voltage of the same level is applied to both ends thereof, the two lenses are turned on so that the image can be seen, and when voltage of different levels is applied to both ends thereof, the two glasses are turned off so that the image cannot be seen. However, in case of a normal black (opaque) mode, operations of the two lenses may be to the opposite of that described above. The driving portion will be described in detail hereinafter.

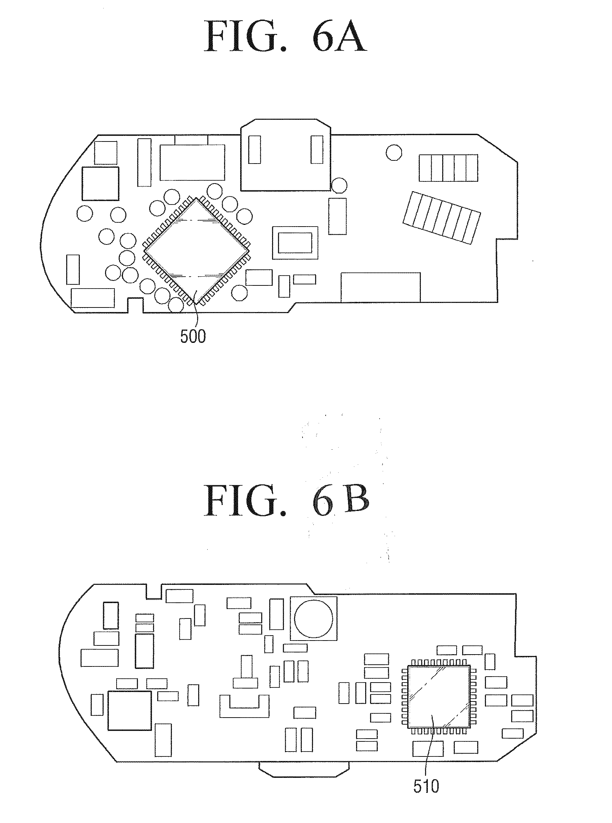

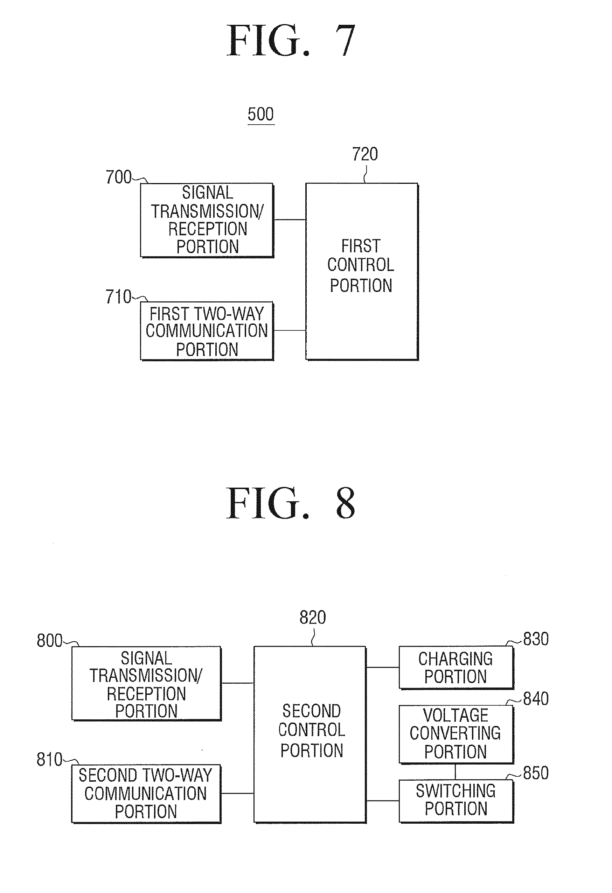

FIG. 5 is a block diagram illustrating a structure of the glasses for a user of FIG. 4, and FIG. 6 is a view schematizing a shape in which the driving portion of FIG. 5 is formed on a printed circuit board. Also, FIG. 7 is a view illustrating exemplary structural details of a first driving portion of FIG. 5, and FIG. 8 is a view illustrating exemplary structural details of a second driving portion of FIG. 5.

As illustrated in FIG. 5, the glasses for a user 410 according to an exemplary embodiment of the present disclosure may be three-dimensional glasses of the shutter glasses method, and may include at least one from among a first driving portion 500, a second driving portion 510-1, a storage portion 510-2 and a lens portion 520. For example, the first driving portion 500 may be integrated with the second driving portion 510-1, the storage portion 510-2 may be configured to be included in the first driving portion 500 or the second driving portion 510-1, or that some configuration elements may be configured to be omitted. However, in order to provide a better understanding of the present disclosure, the glasses for a user 410 will be explained to include all configuration elements.

The glasses for a user 410 according to an exemplary embodiment of the present disclosure, as illustrated in FIG. 6, may be formed so that the first driving portion 500 consists of a single integrated circuit (IC) chip, and the second driving portion 510-1 and the storage portion 510-2 are configured in a shape of a single integrated circuit chip 510. The first driving portion 500, as illustrated in FIG. 6A, may be formed on one side of a printed circuit board as a chip A. The second driving portion 510-1 and the storage portion 510-2, collectively 510, may be formed on the other side of the printed circuit board as a chip B. The opposite sides arrangement structure may improve signal interference or heating problem that may occur between the chip A and the chip B having an integrated circuit chip form. Thus, the first and second driving positions are formed by separate chips. The chips can be on opposite sides of a circuit board.

Further, the first driving portion 500 and the second driving portion 510-1 may be connected with each other by a timing signal line that transmits a timing signal ST using the sync signal which the first driving portion 500 receives and a data signal line that performs bi-directional communication between the first driving portion 500 and the second driving portion 510-1. The data signal line may transmit time interval information when a timing signal ST is sent from the sync signal received by the first driving portion 500 or duty information.

On the other hand, the first driving portion 500 and the second driving portion 510-1 may be formed in various shapes. For example, looking at the control portions 720 and 820 with reference to FIGS. 7 and 8, a first case is that only the first driving portion 500 includes a first control portion 720 (hereinafter, referred to as a configuration example 1). In this case, the first control portion 720 of the first driving portion 500 controls the overall operation of the glasses for a user 410 including the second driving portion 510-1. A second case is that only the second driving portion 510-1 includes a second control portion 820 (hereinafter, referred to as a configuration example 2). In this case, the second control portion 820 of the second driving portion 510-1 controls the overall operation of the glasses for a user 410 including the first driving portion 500. A third case is that the first driving portion 500 and the second driving portion 510-1 include the first control portion 720 and the second control portion 820, respectively (hereinafter, referred to as a configuration example 3). In this case, when the glasses for a user 410 are designed, the first and second driving portions 500 and 510-1 are defined to operate as a master and a slave. Alternatively, the glasses for a user 410 may determine which of the first and second driving portions is a master and a slave based on arbitrary (or received, or determined) information and may automatically define the master and slave based on the determination result. For example, if the first driving portion 500 is determined to operate in error, the second driving portion 510-1 may operate as a master. The combination of FIGS. 7 and 8 illustrate the configuration example 3 thereof.

Looking further, the first driving portion 500, as illustrated in FIG. 7, may include at least one from among a signal transmission/reception portion 700, a first two-way communication portion 710, and the first control portion 720. For example, in the case of the configuration example 2, if the first driving portion 500 does not include the first control portion 720, the first driving portion 500 only plays a role to simply transmit a timing signal and additional information of the received sync signal to the second driving portion 510-1. In order to provide a better understanding of the present disclosure, the first driving portion 500 having all of the above elements will be described.

Here, the signal transmission/reception portion 700 may include a signal transmission end (means) Tx and a signal reception end (means) Rx separated from each other. In fact, in an exemplary embodiment of the present disclosure, the signal transmission/reception portion 700 may include only the signal reception end, and not the signal transmission end. However, if one glasses for a user 410 that receives a sync signal from the image display apparatus 400 needs to send the sync signal to other glasses for a user 410, the glasses for a user 410 can include the signal transmission end.

The signal transmission/reception portion 700 receives a sync signal through an antenna 100a. During the process, if the sync signal is provided in the form of a packet, the signal transmission/reception portion 700 may additionally perform a process of decoding the signal and may further perform various operations such as separation of the received sync signal, generation of a new signal using the sync signal, etc. Here, the separation of signal may mean to separate additional information such as a timing signal, duty information, etc. from the sync signal.

The first two-way communication portion 710 may include a communication module for performing a communication with a second two-way communication portion 810 of the second driving portion 510-1. For example, the first two-way communication portion 710 receives the additional information separated by the signal transmission/reception portion 700 under the control of the first control portion 720 and may play a role to provide it to the second two-way communication portion 810 of the second driving portion 510-1. Further, in the case of the configuration example 3, the first driving portion 500 and the second driving portion 510-1 may send and receive information between each other to set a master and a slave.

The first control portion 720 entirely controls the signal transmission/reception portion 700 and the first two-way communication portion 710 inside the first driving portion 500. During this process, for example, in the case of the configuration example 3, when the first control portion 720 determines whether an error occurs in an inner operations thereof and determines that an error has occurred, or when the first driving portion 500 checks the input voltage, etc. so that a system is determined to be unstable, the first control portion 720 can hand over a role of the master to the second driving portion 510-1. Thus, the determination of which of the first or second driving positions is master and slave can be determined according to a control signal, optionally generated by an analysis of operation of the driving positions.

The second driving portion 510-1, as illustrated in FIG. 8, may include at least one from among a signal transmission/reception portion 800, the second two-way communication portion 810, the second control portion 820, a charging portion 830, a voltage converting portion 840 and a switching portion 850. For example, the second driving portion 510-1 may consist of all the aforementioned elements except the second control portion 820. In order to provide a better understanding of the present disclosure, the second driving portion 510-1 including all the elements as described above will be explained. However, in an exemplary embodiment of the present disclosure, the second driving portion 510-1 may include only the switching portion 850.

The signal transmission/reception portion 800 may consist of a signal input end and a signal output end separated from each other. A sync signal from the first driving portion 500 i.e. a timing signal, is input into the signal input end. In an embodiment with a system in which one of the glasses for a user 410 transmits a sync signal to other glasses for a user 410, the signal output end may play a role to output a signal so that the second driving portion 510-1 can transmit the signal through the antenna 100a of the first driving portion 500.

The second two-way communication portion 810 has a function similar to that of the first two-way communication portion 710. The charging portion 830 performs a role to receive external commercial power, to perform processes of rectifying, smoothing, etc., and to provide a predetermined voltage to a battery.

Also, the voltage converting portion 840 is, for example, a DC/DC converter, and converts voltage in analogue form being provided from the charging portion 830 or the battery into voltage in digital form. Further, the voltage converting portion 840 boosts and outputs the voltage converted in digital form. The converted voltage is used to turn on/off the left and right eye glasses of the glasses for a user 410.

The switching portion 850 may include a plurality of switching devices. The plurality of switching devices are turned on/off by the sync signal, i.e. the timing signal, and output the voltage provided from the voltage converting portion 840 to the glasses for a user 410. Due to this, the left and right eye lenses (glasses) of the glasses for a user 410 are alternately turned on/off. In some aspects, the second driving position controls the switching of the left and right shutter lenses, in particular, by controlling switching portion 850, optionally receiving power from a voltage converting portion 840. The second driving portion controls the shutter switching according to a timing signal received from the first driving portion.

The storage portion 510-2 may include, for example, an electrically erasable programmable read-only memory (EEPROM) that can be read and written on. The storage portion 510-2 can store information (or data) for pairing, that is, compatibility between the glasses for a user 410 and the image display apparatus 400, or a program which implements that in the form of algorithms. The information or the program may be run under the control of the second control portion 820. In FIG. 5, the storage portion 510-2 is integrated with the second driving portion 510-1 to form an IC. However, the storage portion 510-2 may be integrated with the first driving portion 500 to form an IC. Therefore, an exemplary embodiment of the present disclosure is not limited to the structure of FIG. 5. Alternatively, the storage portion can be separate to the first and second driving portions, and in some aspects, can be an optional part of the invention.

Since, as illustrated in FIG. 5, the second driving portion 510-1 and the storage portion 510-2 of the glasses for a user 410 are formed in a single IC chip 510, the glasses for a user 410 may be miniaturized and space efficiency of the inner printed circuit board for circuit configuration may be increased.

Also, manufacturing cost may be reduced when compared to the conventional form using multiple-chip configuration. For example, assembling a single chip uses less labor and less power than to assembling multiple chips.

Further, since the structure of the first driving portion 500 is configured to be distributed to the second driving portion 510-1, power consumption or heat of the first driving portion 500 may be reduced. Due to the simplification of the structure, the number of signal output ports, that is, pins is also reduced. Therefore, manufacturing cost thereof may be reduced.

In addition, since the first driving portion 500 and the second driving portion 510-1 can perform master and slave operations, a system becomes stabilized, and signal processing may be facilitated.

Until now, with reference to FIGS. 5 to 8, as exemplary an embodiment of the present disclosure, the case that the second driving portion 510-1 includes the charging portion 830, the voltage converting portion 840, and the switching portion 850, but does not include the storage portion 510-2 has been explained in detail. However, this does not limit exemplary embodiments of the present disclosure. If the second driving portion 510-1 includes only the switching portion 850, the second driving portion 510-1 is integrated with at least one of the storage portion 510-2, the charging portion 830 and the voltage converting portion 840 which are separately configured as functional blocks to form an IC chip. However, in FIG. 5, the storage portion 510-2 is separated from the second driving portion 510-1. This is intended to illustrate a configuration in which an EEPROM is used as the storage portion 510-2 so that writing data is facilitated.

Hereinafter, the case that the storage portion 510-2 of FIG. 5 is integrated with the second driving portion 510-1 to form an IC chip form (chip B) will be explained.

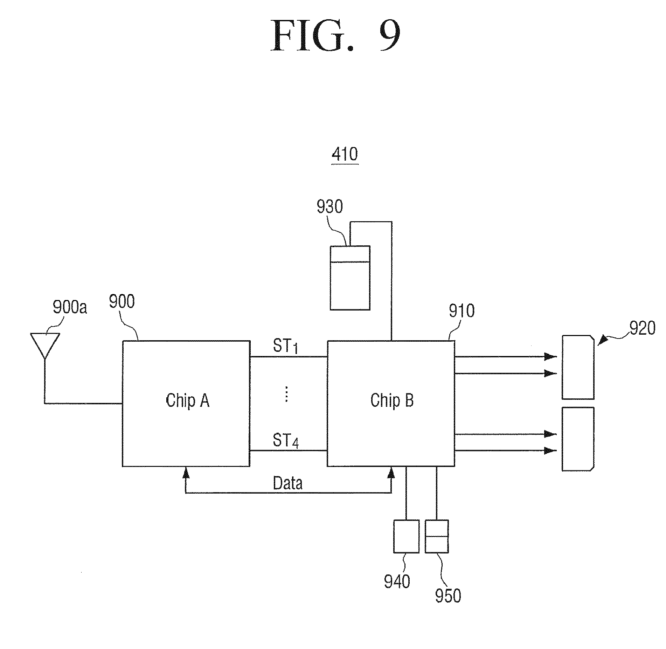

FIG. 9 is a block diagram illustrating another structure of the glasses for a user of FIG. 4.

As illustrated in FIG. 9, the glasses for a user 410 according to an exemplary embodiment of the present disclosure may include at least one from among a first driving portion 900, a second driving portion 910, a lens portion 920, an antenna portion 900a, and peripheral circuits 930, 940 and 950.

Compared to the structure of the glasses for a user 410 of FIG. 5, there is a difference that the structure of the glasses for a user 410 of FIG. 9 further includes the peripheral circuits 930, 940 and 950 and a plurality of timing signal lines for transmitting a sync signal between the first driving portion 900 and the second driving portion 910.

For example, when the first driving portion 900 of the chip A processes a sync signal and other algorithms and outputs a voltage for driving the lens portion 920 as a master, the required number of output ports may be at least two or more. At this time, the second driving portion 910 of the chip B simply performs the role of a passive component so that it simply boosts the output of the first driving portion 900 and transmits the output to the lens portion 920. If the second driving portion 910 of the chip B includes a control portion, wires of more than three ports may be connected and may be used as data signal lines.

Also, the peripheral circuits 930, 940 and 950 may include a battery portion 930, a button portion 940 having a power button, etc., and a status display portion 950 that displays a power-on status and a battery charge status. The peripheral circuits 930, 940 and 950 may be connected to and operated in association with the first driving portion 900 and the second driving portion 910 according to the configuration examples 1, 2 and 3. However, FIG. 9 illustrates they are operated in association with the second driving portion 910.

Also, the first driving portion 900 may generate a plurality of timing signals, ST1... STn, with respect to the received sync signal and may provide the plurality of timing signals to the second driving portion 910. In this case, a plurality of timing signal lines may disposed between the first driving portion 900 and the second driving portion 910. However, in terms of cost savings, an exemplary embodiment of the present disclosure may have a relatively small number of lines.

Except for the above description, the first driving portion 900 and the second driving portion 910 are similar to the first driving portion 500 and the second driving portion 510-1 of FIG. 5. Therefore, further explanation thereof will be omitted.

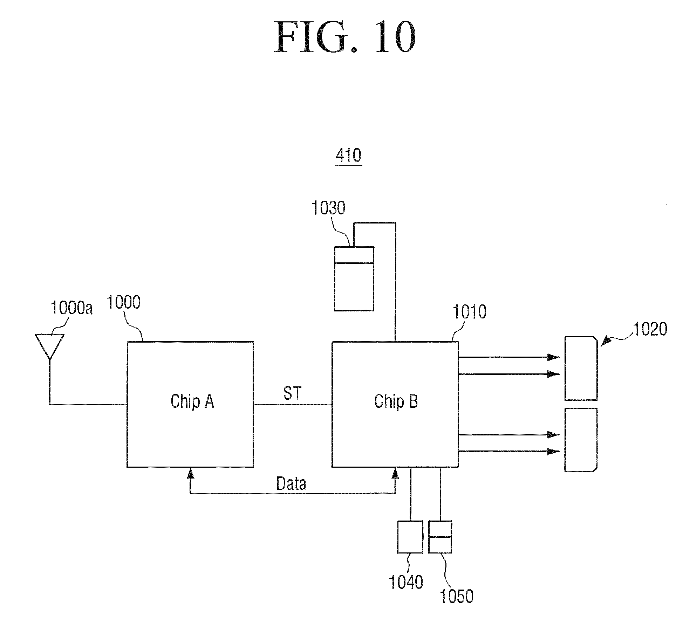

FIG. 10 is a block diagram illustrating an example of still another exemplary structure of the glasses for a user of FIG. 4.

As illustrated in FIG. 10, the glasses for a user 410 according to an embodiment of the present disclosure may include at least one from among a first driving portion 1000, a second driving portion 1010, a lens portion 1020, an antenna portion 1000a, and peripheral circuits 1030, 1040 and 1050.

There is one timing signal line between the first driving portion 1000 and the second driving portion 1010. The first driving portion 1000 may generate one timing signal with respect to the received sync signal and transmit it to the second driving portion 1010.

For example, if the second driving portion 1010 of the chip B acts as a master and the first driving portion 1000 of the chip A transmits a sync signal and additional information to the second driving portion 1010 of the chip B, the required number of output ports may be more than one.

Except for the above description, the content relating to the first driving portion 1000, the second driving portion 1010, the lens portion 1020, and the peripheral circuits 1030,1040 and 1050 is not significantly different from the content of the first driving portion 900, the second driving portion 910, the lens portion 920, and the peripheral circuits 930, 940 and 950 of FIG. 9. Therefore, further explanation thereof will be omitted.

Due to the above configuration, the number of pins of the first driving portion 1000 formed in an IC chip of the glasses for a user 410 of FIG. 10 may be reduced when compared to the glasses for a user 410 of FIG. 9. Therefore, manufacturing cost and power consumption thereof may be reduced.

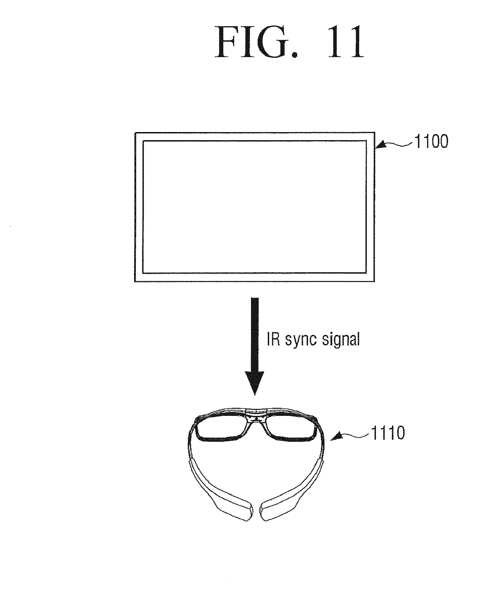

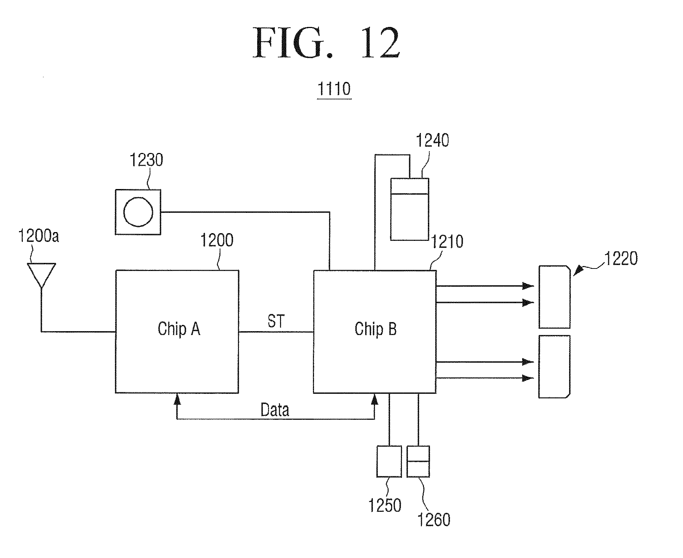

FIG. 11 is a view for explaining a three-dimensional image realization system according to another aspect of an exemplary embodiment, and FIG. 12 is a block diagram illustrating an exemplary structure of glasses for a user of the three-dimensional image realization system of FIG. 11.

Referring to FIGS. 11 and 12, the three-dimensional image realization system according to another aspect of an exemplary embodiment may include an image display apparatus 1100 and glasses for a user 1110. Here, the glasses for a user 1110 may include at least one from among a first driving portion 1200, a second driving portion 1210, a lens portion 1220, an infrared signal receiving portion 1230, an antenna portion 1200a, and peripheral circuits 1240, 1250, and 1260.

When compared with the image display apparatus 400 of FIG. 4, the image display apparatus 1100 may transmit an infrared signal that can perform one-way communication along with an RF signal that can perform two-way communication as the sync signal. In this case, as illustrated in FIG. 12, the first driving portion 1200 of the glasses for a user 1110 may process an RF sync signal received through an antenna 1200a and the second driving portion 1210 thereof may process an infrared sync signal received through the infrared signal receiving portion 1230. This is possible when each of the first driving portion 1200 and the second driving portion 1210 includes a control portion like configuration example 3.

If the first driving portion 1200 of FIG. 12 is operated in association with the infrared signal receiving portion 1230, the second driving portion 1210 does not include a separate control portion and may drive the lens portion 1220 on and off based on the sync signal provided by the first driving portion 1200, i.e. a timing signal.

Except for the above description, the content relating to the first driving portion 1200, the second driving portion 1210, the lens portion 1220, and the peripheral circuits 1240, 1250 and 1260 is not significantly different from the content of the first driving portion 900, the second driving portion 910, the lens portion 920, and the peripheral circuits 930, 940 and 950 of FIG. 9. Therefore, further explanation thereof will be omitted.

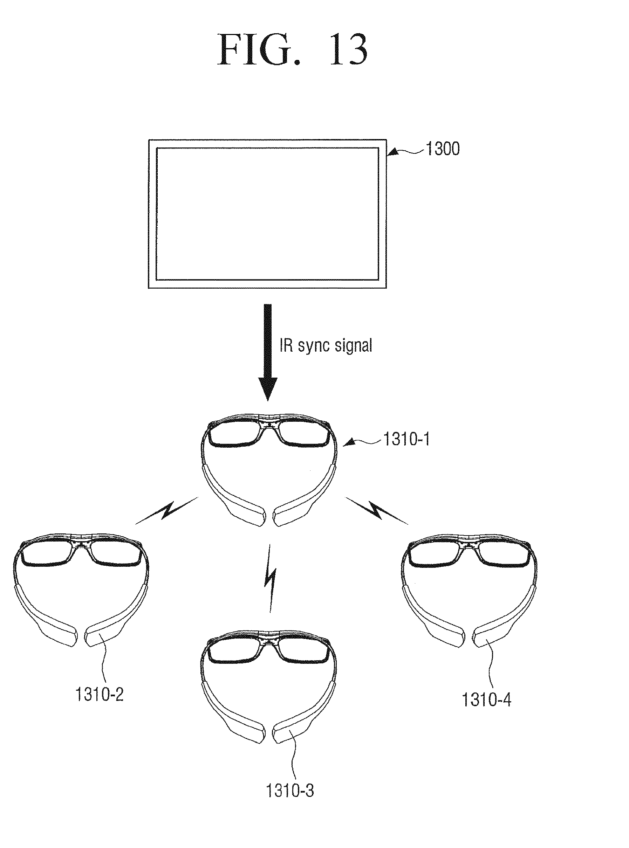

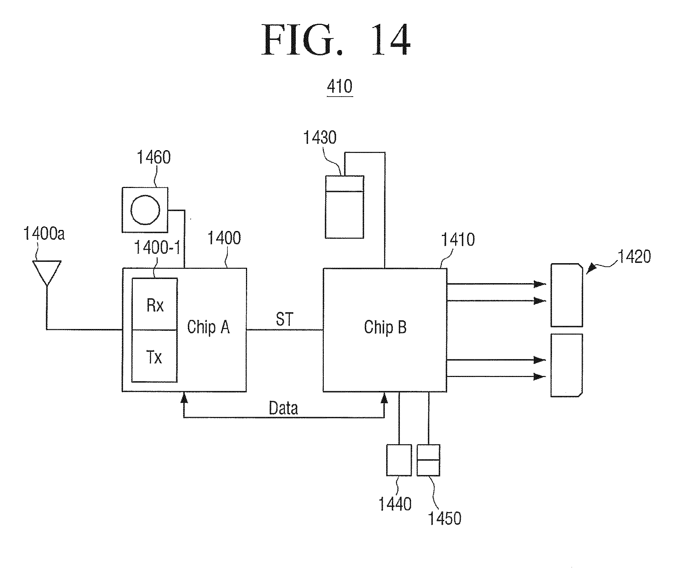

FIG. 13 is a view for explaining a three-dimensional image realization system according to another aspect of an exemplary embodiment, and FIG. 14 is a block diagram illustrating an exemplary structure of glasses for a user the three-dimensional image realization system of FIG. 13.

Referring to FIGS. 13 and 14, the three-dimensional image realization system according to another aspect of an exemplary embodiment may include an image display apparatus 1300 and a plurality of glasses for a user 1310-1, 1310-2, 1310-3, and 1310-4. Here, the glasses for a user 1310-1 may include at least one from among a first driving portion 1400, a second driving portion 1410, a lens portion 1420, an antenna portion i400a, peripheral circuits 1430, 1440, and 1450, and an infrared signal receiving portion 1460.

The image display apparatus 1300 may transmit at least one signal from among: an RF signal that can perform two-way communication, and, an infrared signal that can be a one-way communication as a sync signal. FIG. 13 illustrates that the image display apparatus 1300 transmits an infrared signal.

The first glasses for a user 1310-1 are combined use glasses that can communicate with both the display apparatus and other sets of glasses, i.e. process both the RF signal and the IR signal. The second, third, and fourth glasses for a user 1310-2,1310-3, and 1310-4 can communicate only with the first set of glasses 1310-1, and not with the display apparatus. For example, the second, third and fourth glasses are RF glasses that can process the RF signals. The first glasses for a user 1110 may convert the IR signal into the RF signal and provide the other RF glasses with necessary information on the operation thereof. The communication with the display apparatus by the first set of glasses can use a different type of communication signal, e.g. different frequency range/type and/or different protocol to the communication of the first set of glasses with the second (or further) set of glasses. An embodiment of the present invention can be a system comprising an image display apparatus and a plurality of sets of glasses, wherein one or more sets of glasses is configured to receive signals (e.g. sync signals) from another of the sets of glasses.

During this process, the control portion of the first driving portion 1400 as illustrated in FIG. 14, that is, the first control portion 720 of FIG. 7 judges or analyzes the received sync signal and may determine whether or not to send it depending on the result. The control portion may include a separate determination portion to perform this process.

For example, the second driving portion 1410 of the chip B may convert sync, timing, and more information which the first driving portion 1400 of the chip A receives through the infrared signal receiving portion 1460 into sync/data, and may again transmit it to the first driving portion 1400 of the chip A. At this time, the first driving portion 1400 of the chip A converts the sync/data into an RF signal and may transmit the RF signal to the second, third, and fourth glasses for a user 1310-2,1310-3, and 1310-4 through the signal transmission end Tx of transmission/reception portion 1400-1.

On the other hand, although not illustrated in the drawings, the first glasses for a user 1310-1 receives a sync signal that the image display apparatus 1300 transmits, for example, an RF sync signal through the signal receiving end Rx of the first driving portion 1400, and the control portion thereof can again transmit the sync signal to the second, third, and fourth glasses for a user 1310-2,1310-3, and 1310-4 through the signal transmission end Tx.

Except for the above description, the content relating to the first driving portion 1400, the second driving portion 1410, the lens portion 1420, and the peripheral circuits 1430, 1440 and 1450 is not significantly different from the content of the first driving portion 900, the second driving portion 910, the lens portion 920, and the peripheral circuits 930, 940 and 950 of FIG. 9. Therefore, further explanation thereof will be omitted.

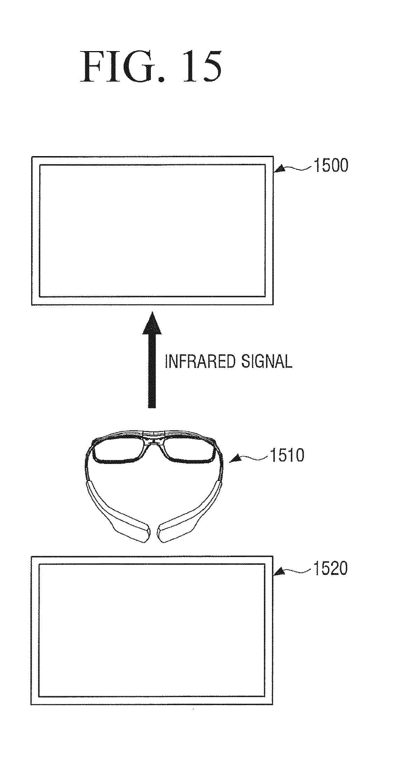

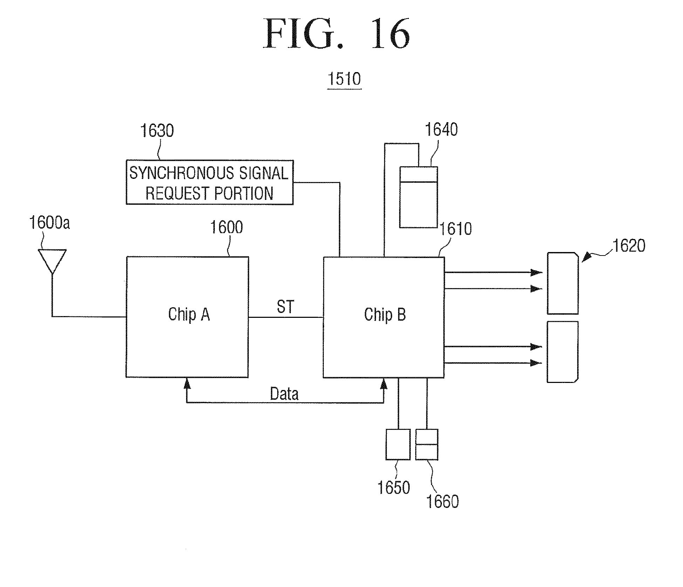

FIG. 15 is a view for explaining a three-dimensional image realization system according to another aspect of an exemplary embodiment, and FIG. 16 is a block diagram illustrating an exemplary structure of glasses for a user of the three-dimensional image realization system of FIG. 15.

Referring to FIGS. 15 and 16, the three-dimensional image realization system according to another aspect of an exemplary embodiment may include an image display apparatus 1500 and glasses for a user 1510. Here, the glasses for a user 1510 may include at least one from among a first driving portion 1600, a second driving portion 1610, a lens portion 1620, a sync signal request portion 1630, an antenna portion i6ooa, and peripheral circuits 1640, 1650, and 1660.

When there is another three-dimensional image display apparatus 1520 near the glasses for a user 1510 in addition to the image display apparatus 1500 which the glasses for a user 1510 is targeting to receive a sync signal, the glasses for a user i5io may tend to receive a sync signal from a nearer image display apparatus 1520. This may be caused by the fact that the glasses for a user 1510 communicate with image display apparatus 1520 based on signal strength.

In order to address the problem, in an exemplary embodiment of the present disclosure, in order to receive a sync signal from the image display apparatus 1500 which the glasses for a user 1510 targets, the glasses for a user 1510 may cause the sync signal request portion 1630 to send an infrared signal to the image display apparatus 1500 to which the lens portion 1620 is oriented. Then, the image display apparatus 1500 transmits a sync signal to the glasses for a user 1510 based on the request. The infrared signal may be sent automatically after the oriented direction of the glasses for a user i5io is determined or may be sent when a user manipulates a button of the button portion 1650.

Except for the above description, the content relating to the first driving portion 1600, the second driving portion 1610, the lens portion 1620, and the peripheral circuits 1640, 1650 and 1660 is not significantly different from the content of the first driving portion 900, the second driving portion 910, the lens portion 920, and the peripheral circuits 930, 940 and 950 of FIG. 9. Therefore, further explanation thereof will be omitted.

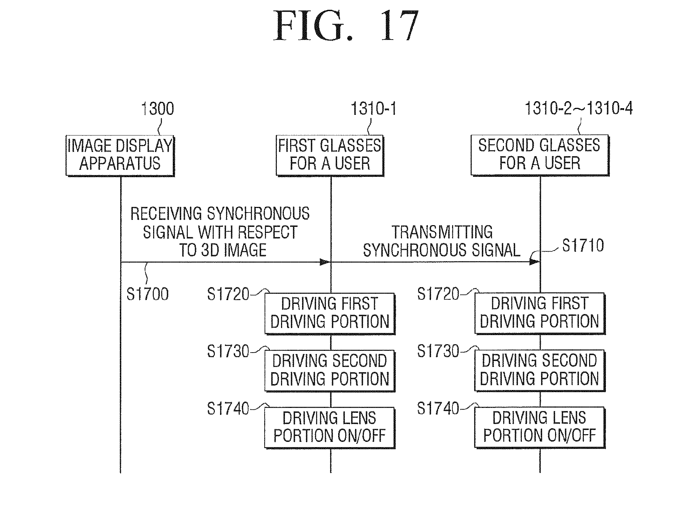

FIG. 17 is a view illustrating a method for realizing a three-dimensional image according to an exemplary embodiment of the present disclosure.

For convenience of description, with reference to FIG. 17 along with FIGS. 13 and 14, the first glasses for a user 1310-1 receives a sync signal synchronized to a three-dimensional image being displayed on the image display apparatus 1300 from the image display apparatus 1300 (S1700).

Then the first glasses for a user 1310-1 transmit the received sync signal to the second glasses for a user 1310-2 (S1710). During the process the first glasses for a user 1310-1 can transmit the received sync signal after determining or analyzing whether or not to transmit the received sync signal. Signal processing has been fully explained with reference to FIGS. 13 and 14. Therefore, further explanation thereof will be omitted.

Next, the first glasses for a user 1310-1 use the received sync signal to allow the first driving portion 1400 of FIG. 14, specifically, the control portion to transmit a sync signal or a timing signal of the sync signal to the second driving portion 1410 (S1720). The second glasses for a user 1310-2 (if present) also are driven in the same way by the sync signal received from the first glasses for a user 1310-1.

After that, in the first glasses for a user 1310-1, the second driving portion 1410 is operated by the sync signal provided from the first driving portion 1400 to output a voltage to the lens portion 1420 so as to alternatively drive the left and right eye glasses of the lens portion 1420 on/off (S1730 and S1740). The second glasses for a user 1310-2 also are operated in the same way.

Due to the above described process, the first glasses for a user 1310-1 and the second glasses for a user 1310-2 can watch three-dimensional images being displayed on the image display apparatus 1300.

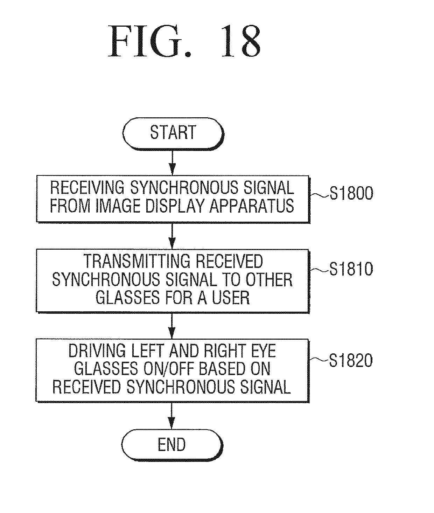

FIG. 18 is a flowchart illustrating a driving method for glasses for a user according to an embodiment of the present disclosure.

For convenience of description, with reference to FIG. 18 along with FIGS. 13 and 14, the first glasses for a user 1310-1 receives a sync signal from the image display apparatus 1300 (S1800). For example, the sync signal may be a signal that performs one-way communication (e.g. IR) or a signal, e.g. RF, such as a Bluetooth, etc., which can perform two-way communication.

Then, the first glasses for a user 1310-1 transmits the received sync signal to the second, third, and fourth glasses for a user 1310-2, 1310-3, and 1310-4 (S1810). During the process the first glasses for a user 1310-1 can transmit the received sync signal or a new signal generated after a separate signal process is performed.

After that, the first glasses for a user 1310-1 alternately drives the left and right eye glasses on/off based on the received sync signal (S1820).

For example, the first glasses for a user 1310-1 switches input voltage from the outside based on the sync signal, and alternately outputs the desired voltage to the left and right eye glasses, thereby driving them on/off. Such operations have been fully explained in the above description, therefore, further explanation thereof will be omitted.

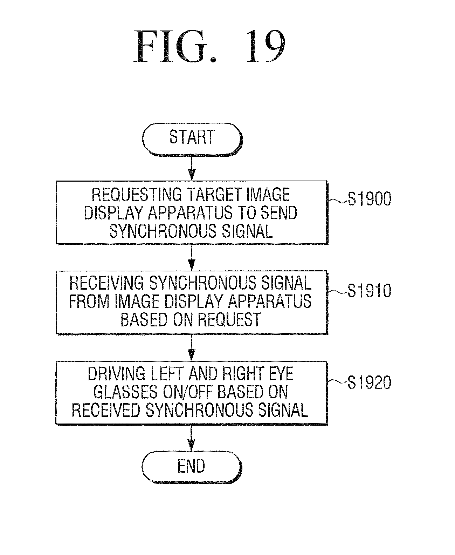

FIG. 19 is a flowchart illustrating a driving method for glasses for a user according to another aspect of an exemplary embodiment.

For convenience of description, with reference to FIG. 19 along with FIGS. 15 and 16, the glasses for a user 1510 sends a request signal that requests transmission of a sync signal to the image display apparatus 1500 which the glasses for a user 1510 targets (S1900). Here, the request signal may be an infrared signal provided by a light emitting device such as a light emitting diode (LED). Also, the glasses for a user 1510 may automatically recognize the targeted image display apparatus 1500 to send an infrared signal thereto. Alternatively, when a user operates a separate button, the glasses for a user 1510 may send the infrared signal thereto. Using this button, a kind of pairing operation can be performed.

Next, the glasses for a user 1510 receive a sync signal based on the request from the image display apparatus 1500 (S1910).

After that, the glasses for a user 1510 alternately drives the left and right eye glasses on/off based on the received sync signal (Si92o).

Through this process, the glasses for a user 1510 can watch three-dimensional images being displayed on the image display apparatus 1500.

In the above descriptions with respect to various exemplary embodiments, except in the case of FIG. 12, three-dimensional glasses receive an infrared signal or an RF signal as the sync signal. However, exemplary embodiments of the present disclosure are not limited by that. For example, if the three-dimensional glasses are combined use glasses, the three-dimensional glasses may be designed so that both infrared signal and RF signal are received and corresponding blocks are operated as necessary. The glasses can be configured to operate only the processing blocks needed to process the signal type determined. For example if the sync signal received by the first driving portion or the second driving portion is determined an infrared signal, blocks for processing the infrared signal are operated. Also, if it is determined an RF signal, blocks for processing the RF signal are operated. In addition, during this process, the three-dimensional glasses may determine master and slave operations of the first driving portion and the second driving portion and may drive the first and second driving portions. Content relating to these operations have been fully explained in the above description and further explanation thereof will be omitted.

An image display apparatus has been described as interacting with the glasses. Alternatively, an apparatus separate to the display can communicate with the glasses and with the display, e.g. a set top box. The separate apparatus and display can be considered together as an image forming apparatus.

While the exemplary embodiments of the present disclosure have been described, additional variations and modifications of the exemplary embodiments may occur to those skilled in the art once they learn of the basic inventive concepts. Therefore, it is intended that the appended claims shall be construed to include both the above exemplary embodiments and all such variations and modifications that fall within the scope of the inventive concepts.

## Claims

1. Three-dimensional glasses, comprising:
a first driving portion that receives a sync signal from an image display apparatus on which a three-dimensional image is displayed, and generates and outputs a timing signal corresponding to the received sync signal;
a second driving portion that outputs an output voltage according to the timing signal;
a storage portion that stores information for pairing with the image display apparatus and outputs the stored information on request of the first or second driving portion; and
a lens portion having left and right eye lenses that alternately perform on and off operations based on the output voltage of the second driving portion,

2. The three-dimensioned glasses of claim 1 wherein the second driving portion and the storage portion are configured on a single chip.

3. The three-dimensional glasses of claim 1 or 2, wherein
the first driving portion and the second driving portion are connected with each other by at least one timing signal line for carrying the timing signal.

4. The three-dimensional glasses of any one of the preceding claims, wherein
the sync signal further comprises additional information in addition to the timing signal, and optionally,
wherein the first driving portion and the second driving portion are additionally connected with each other by a data signal line for carrying the additional information.

5. The three-dimensional glasses of any one of the preceding claims, wherein
each of the first driving portion and the second driving portion comprises a control portion to process the additional information; and
wherein each of the first driving portion and the second driving portion operates according to a setting of a master or a slave.

6. The three-dimensional glasses of any one of the preceding claims, further comprising:
a sync signal request portion that transmits a request signal to the image display apparatus that the three-dimensional glasses targets,
wherein the image display apparatus sends the sync signal to the three-dimensional glasses that transmitted the request signal.

7. The three-dimensional glasses of any one of the preceding claims, further comprising:
an infrared signal receiving portion that receives an infrared signal from the image display apparatus as the sync signal,
wherein when the first driving portion receives and processes a radio frequency (RF) signal as the sync signal, the second driving portion processes the infrared signal which the infrared signal receiving portion receives.

8. The three-dimensional glasses of any one of the preceding claims, wherein
the first driving portion comprises a signal transmission portion that retransmits the received sync signal to at least one other three-dimensional glasses.

9. The three-dimensional glasses of any one of the preceding claims wherein the first driving portion and second driving portion are formed on separate chips.

10. A driving method of three-dimensional glasses, comprising:
receiving a sync signal from an image display apparatus on which a three-dimensional image is displayed; and
driving left and right eye glasses to alternately perform on and off operations based on the sync signal.

11. The driving method of claim 10 further comprising transmitting the received sync signal to at least one other set of glasses for a user.

12. The driving method of three-dimensional glasses of claim 11, wherein
the transmitting the received sync signal to at least one other glasses for a user comprises:
converting the received sync signal into another sync signal different from the received sync signal and transmitting the converted sync signal.

13. The driving method of three-dimensional glasses of any one of claims 10 to 12, comprises:
requesting a target image display apparatus which can display a three-dimensional image to send a sync signal;
receiving the sync signal from the target image display apparatus based on the request; and
driving left and right eye glasses to alternately perform on and off operations based on the sync signal.

14. The driving method of three-dimensional glasses of claim 13, wherein
the requesting a target image display apparatus which can display a three-dimensional image to send a sync signal comprises:
transmitting an infrared signal to the image display apparatus in order to request transmission of the sync signal.

15. The driving method of three-dimensional glasses of any one of claims 10 to 14 comprising storing data for pairing in a storage portion.
